# EUROPÄISCHE PATENTSCHRIFT

(11) **EP 2 802 476 B1**
(45) Veröffentlichungstag und Bekanntmachung des Hinweises auf die Patenterteilung: **11.01.2017**
(21) Anmeldenummer: 12719586.5
(22) Anmeldetag: 28.04.2012
(51) Int. Cl.: B60K 37/06

(54) **VERFAHREN UND VORRICHTUNG ZUM ERZEUGEN EINER 3D-DARSTELLUNG EINER BENUTZEROBERFLÄCHE IN EINEM FAHRZEUG**
METHOD AND DEVICE FOR GENERATING A 3D REPRESENTATION OF A USER INTERFACE IN A VEHICLE
PROCÉDÉ ET DISPOSITIF DE PRODUCTION D'UNE REPRÉSENTATION EN 3D D'UNE INTERFACE UTILISATEUR DANS UN VÉHICULE

(30) Priorität: 09.01.2012 DE 102012001036
(43) Veröffentlichungstag der Anmeldung: 19.11.2014
(73) Patentinhaber: Audi AG, 85045 Ingolstadt (DE)
(72) Erfinder: EBNER, André, 85051 Ingolstadt (DE); HALLIGER, Mathias, 85110 Kipfenberg (DE); RÖDLMEIER, Stefan, 85057 Ingolstadt (DE)
(74) Vertreter: Schuster, Simon
(86) Internationale Anmeldenummer: PCT/EP2012/001838
(87) Internationale Veröffentlichungsnummer: WO 2013/104378

(56) Entgegenhaltungen:
- WO-A2-2006/108617
- DE-A1-102007 039 442
- DE-A1-102007 063 049
- US-B1- 6 369 701

## Beschreibung

Die Erfindung betrifft ein Verfahren zum Erzeugen einer 3D-Darstellung einer Benutzeroberfläche in einem Fahrzeug und eine entsprechende Vorrichtung in einem Fahrzeug. Ein solches Verfahren ist aus der WO2006/108617 A2 bekannt.

Fahrzeuge bieten seit jeher verschiedene Einstellmöglichkeiten für verschiedene Fahrzeugsysteme an, die beispielsweise über spezielle Bedienelemente realisiert sind. In modernen Kraftfahrzeugen werden jedoch immer häufiger großflächige Anzeigevorrichtungen, insbesondere Displays, eingesetzt, wobei sich zudem die verfügbare Rechenleistung erhöht. Daher ist es möglich und wurde bereits vorgeschlagen, graphische Benutzeroberflächen in Fahrzeugen einzusetzen, die beispielsweise auf den Displays angezeigt werden können und/oder einen Benutzer menugesteuert durch verschiedene Einstellmöglichkeiten leiten.

Dabei werden die angebotenen Einstellmöglichkeiten und Funktionalitäten auch immer weitgehender und anspruchsvoller. Neben etablierten Radiofunktionen und der Wiedergabe von digitalen Medien ist es auch bekannt, beispielsweise Bluetooth-Telefonie sowie Koppelnavigation mit entsprechender Kartendarstellung zu realisieren. Auch immer mehr realisierte Fahrerassistenzsysteme bieten Einstellmöglichkeiten an. Eine weitere vorgeschlagene Möglichkeit zur Erweiterung des Bedien- und Informationsspektrums ist die Nutzung fahrzeugexterner Inhalte, beispielsweise aus dem Internet. So kann ein fahrzeuginternes Infotainment-System drahtlos mit einer externen Informationsquelle verbunden werden, beispielsweise im Hinblick auf Kartenfunktionen. So können Satellitenbilder und spezielle Darstellungen aus dem Internet abgerufen werden.

Heute bekannte Systeme mit solchen Benutzeroberflächen, im allgemeinen Infotainment-Systeme und Mensch-Maschine-Interfaces (MMIs), verwenden heutzutage meist ausschließlich zweidimensionale Darstellungen, beispielsweise Listen, Icons oder Fahrzeugskizzen, oder sie greifen auf außerhalb des Fahrzeugs vorberechnete (gerenderte) 3D-Darstellungen zurück, die in Form von zweidimensionalen Grafiken und/oder Animationen angezeigt werden.

Dies hat einige Nachteile zur Folge. So ist es mit dem bisherigen Ansatz nicht oder nur sehr schwer möglich, komplexe, räumliche Zusammenhänge zu visualisieren, beispielsweise die Verortung von Funktionen in dem Fahrzeug. Außerhalb des Fahrzeugs vorberechnete 3D-Darstellungen oder -Sequenzen benötigen einen hohen Speicherbedarf und bieten nur wenig bzw. gar keine Flexibilität, da nur eine begrenzte Zahl von möglichen Varianten vorher gerendert werden kann.

Der Erfindung liegt daher die Aufgabe zugrunde, eine demgegenüber verbesserte Visualisierungsmöglichkeit anzugeben.

Zur Lösung dieser Aufgabe ist erfindungsgemäß bei einem Verfahren zum Erzeugen einer 3D-Darstellung einer Benutzeroberfläche in einem Fahrzeug vorgesehen, dass eine wenigstens ein 3D-Objekt enthaltende, insbesondere bewegte, Szene durch eine fahrzeuginterne Recheneinrichtung zur Ermittlung der 3D-Darstellung gerendert wird.

Erfindungsgemäß wird also vorgeschlagen, insbesondere für teurere Fahrzeuge, um dem Premium- und Innovationsanspruch gerecht zu werden, eine dreidimensionale Anzeige vollständig innerhalb des Fahrzeugs zu realisieren, insbesondere innerhalb der Fahrzeug-Infotainment-Systeme. Auch eine bewegte, also animierte Darstellung wird dabei besonders bevorzugt. Daher wird die bislang übliche 2D-Darstellung auf einer Benutzeroberfläche im Fahrzeug um ein Echtzeit-3D-Rendering erweitert beziehungsweise dadurch ersetzt. Die 3D-Darstellungen, im Falle animierter Bilder die 3D-Sequenzen, werden erfindungsgemäß nicht außerhalb des Kraftfahrzeuges vorberechnet, sondern in Echtzeit während der Benutzung (des Bedienvorgangs) auf Basis von entsprechenden Szenen, die 3D-Modellen entsprechen, generiert.

Dabei ist unter einer Szene auch im Rahmen der vorliegenden Erfindung ein virtuelles räumliches Modell zu verstehen, dass die dreidimensionale Position und Materialeigenschaften wenigstens eines 3D-Objektes, wenigstens eine Lichtquelle und die Position und Betrachtungsrichtung wenigstens eines Beobachters umfasst. Im Rahmen des Renderns wird die dreidimensionale Szene dann auf eine zweidimensionale Bildebene abgebildet, so dass eine 3D-Darstellung erhalten wird, die auf einer Anzeigevorrichtung des Fahrzeugs, insbesondere einem Display, angezeigt werden kann. Auf der Recheneinrichtung, die insbesondere Teil eines Infotainment-Systems ist, kann hierfür wenigstens ein Computerprogramm, insbesondere ein Renderer, vorgesehen sein. Bevorzugt ist es, wenn insbesondere im Rahmen bewegter Szenen wenigstens 15 Darstellungen pro Sekunde ermittelt werden können.

Die Verwendung von 3D-Darstellungen wenigstens als Teil von Benutzeroberflächen erlaubt es mithin, Bedienabläufe für einen Insassen des Fahrzeugs deutlich verständlich zu visualisieren, beispielsweise durch die 3D-Visualisierung einer Funktion in dem Fahrzeug ergänzend zu einer rein textuellen Funktionsbezeichnung. Zum anderen kann der "Joy-of-Use" des Systems durch neue Möglichkeiten im Bereich des Benutzeroberflächen-Designs (GUI-Designs) deutlich erhöht werden.

Im erfindungsgemäßen Verfahren wird ausgenutzt, dass in heutigen Kraftfahrzeugen meist höhere Rechenleistungen vorliegen, die nun auch ein Echtzeit-Rendering vor Ort erlauben und dabei beispielsweise Speichervorrichtungen entlasten, in denen sonst ggf. vorgerenderte 3D-Darstellungen vorgehalten werden müssten, und die Flexibilität erhöhen. Im Rahmen der Erfindung kann eine 3D-Darstellung ausschließlich für die Zwecke der Anzeige gerendert werden.

In besonders vorteilhafter Ausgestaltung der vorliegenden Erfindung kann vorgesehen sein, dass bei Vornahme wenigstens einer Bedienhandlung die Szene verändert und die 3D-Darstellung, insbesondere in Echtzeit, neu gerendert wird. Bedienhandlungen eines Benutzers führen also dazu, dass sich die 3D-Darstellung verändert. Dabei ist beispielsweise wenigstens einem Teil der möglichen Bedienhandlungen jeweils wenigstens eine Veränderung wenigstens eines 3D-Objekts, insbesondere eine räumliche Transformation, und/oder eine definierte Anordnung (und ggf. Bewegung) der 3D-Objekte in der Szene zugeordnet. Selbstverständlich können Bedienhandlungen auch Änderungen der Perspektive, der Beleuchtung und dergleichen entsprechend zugeordnet werden. Entsprechende Zuordnungen können in einer Speichereinrichtung der Recheneinrichtung abgelegt sein. Nach einer Bedienhandlung stellt die Recheneinrichtung mithin die Szene entsprechend der Vorgaben zusammen, rendert sie und stellt sie auf einer Anzeigevorrichtung dar, beziehungsweise erzeugt eine Bewegung in der Szene, so dass dann letztlich eine 3D-Sequenz entsteht.

Mithin kann vorgesehen sein, dass zur Veränderung der Szene wenigstens eines des wenigstens einen 3D-Objektes rotiert und/oder translatiert und/oder skaliert und/oder in seiner Opazität angepasst wird und/oder wenigstens ein 3D-Objekt hinzugefügt oder entfernt wird. Es können also für entsprechende Bedienanforderungen des Fahrers definierte, räumliche Transformationen auf die hinterlegten 3D-Modelle der darzustellenden Elemente, mithin der 3D-Objekte, angewendet werden, unter anderem durch Skalierung, Rotation und Translation, wobei es auch denkbar ist, 3D-Objekte für bestimmte Bedienhandlungen oder bei bestimmten Anzeigezuständen gänzlich zu entfernen oder hinzuzufügen. Jeweils die aktuelle räumliche Szene wird in Echtzeit auf die zweidimensionale Bildebene abgebildet und auf der Anzeigevorrichtung, insbesondere dem Display, dargestellt. Entsprechende Beleuchtungsmodelle und variable Opazitäten können auch berücksichtigt werden.

Allgemein ist es, wie bereits dargelegt wurde, im erfindungsgemäßen Verfahren bevorzugt und zweckmäßig, auch eine Bewegung in der 3D-Darstellung abzubilden, insbesondere im Rahmen eines Darstellungswechsels bei einer Bedienhandlung und/oder als grundsätzlich animierte 3D-Objekte aufweisende Darstellung. So kann beispielsweise ein Telefonhörer-Symbol wackelnd dargestellt werden und dergleichen, und bei einer eine Anwahl anderer Elemente können die 3D-Objekte gegeneinander verschoben werden, bei einem Menu beispielsweise in einem Kreis.

In einer konkreten Ausgestaltung der vorliegenden Erfindung kann vorgesehen sein, dass zur Darstellung eines Menus für jeden Menupunkt ein 3D-Objekt in der Szene verwendet wird. Die vorliegende Erfindung kann also auf ein Menu angewendet werden. Anstatt, wie üblich, die Auswahl über zweidimensionale Listen oder zweidimensionale Icons zu realisieren, kann erfindungsgemäß auch vorgesehen sein, eine 3D-Darstellung zu wählen, in der 3D-Objekte Menupunkten zugeordnet sind. Die den Menupunkten zugeordneten 3D-Objekte werden in Echtzeit durch die bordinterne Recheneinrichtung gerendert. Dabei kann, wie bereits dargelegt wurde, beispielsweise eine Rotation, Skalierung oder Translation der 3D-Objekte erfolgen. Als 3D-Objekte können beispielsweise Symbole, also Sinnbilder, verwendet werden, aber auch beispielsweise mit Symbolen und/oder Icons und/oder Text versehene dreidimensionale Körper.

In Weiterbildung dieser Ausgestaltung kann vorgesehen sein, dass zu einem aktuell angewählten Menupunkt ein insbesondere leinwandartig in die 3D-Szene eingepflegtes Vorschauobjekt, insbesondere eine 3D-Textur, verwendet wird, welches eine zweidimensionale Vorschau der Benutzeroberfläche nach Auswahl des Menupunktes umfasst. Auf diese Weise kann also in die dreidimensionale Darstellung integriert eine Vorschau realisiert werden, bei der beispielsweise ein Submenu oder eine auszuwählende Funktion als 3D-Textur in dem Auswahlmenu dargestellt werden kann. Das Vorschauobjekt kann als eine Art "Leinwand" angesehen werden, auf die das Aussehen der Benutzeroberfläche bei Auswahl eines gerade angewählten Menupunktes projiziert wird. Das Vorschauobjekt kann dabei grundsätzlich beliebig im Raum angeordnet, beleuchtet oder transformiert sein, wobei in besonders zweckmäßiger Ausgestaltung der vorliegenden Erfindung das Vorschauobjekt aus Blickrichtung der Szene hinter dem aktuell angewählten, also im Fokus befindlichen Menupunkt angeordnet sein kann.

Dabei kann in einer ersten Ausführungsform vorgesehen sein, dass die Vorschau während der Darstellung basierend auf aktuellen Daten errechnet wird und insbesondere während der Darstellungszeit aktuell gehalten wird. In dieser erfindungsgemäß bevorzugten Variante werden also aktuelle Daten ausgewertet, um die Vorschau so zu ermitteln, wie sie dann auch tatsächlich angezeigt würde. Im Hinblick auf eine Navigationskarte bedeutet dies beispielsweise, dass die Kartendarstellung die aktuelle Umgebung des Kraftfahrzeugs betrifft. Um die Vorschau zu ermitteln, kann dabei auf Routinen der entsprechenden Funktion zugegriffen werden. Vorteilhaft wird die Vorschau auch ständig aktuell gehalten, was aufgrund des vorgesehenen Echtzeit-Renderns auch problemlos möglich ist.

Alternativ ist es in einer zweite Ausführungsform jedoch auch denkbar, dass eine während der letzten Benutzung der dem aktuell angewählten Menupunkt zugeordneten Funktionalität angezeigte, gespeicherte Darstellung als Vorschau verwendet wird oder, falls der Menupunkt noch nicht ausgewählt wurde, eine gespeicherte Default-Darstellung als Vorschau verwendet wird. Es ist also auch denkbar, dass die Vorschau während einer vorangegangenen Benutzung als eine Art "Screenshot" gespeichert wurde bzw. dann, wenn die Funktionalität noch nicht aufgerufen wurde, ein Default-Bild, welches in einer Speichereinrichtung hinterlegt ist, verwendet wird.

In einer weiteren konkreten Ausgestaltung der Erfindung kann vorgesehen sein, dass als ein 3D-Objekt ein Abbild des Fahrzeugs verwendet wird. Dies ermöglicht es, Zusammenhänge bezüglich des Kraftfahrzeugs besonders intuitiv darzustellen, nachdem das Abbild beliebig gedreht, skaliert und zumindest teilweise in seiner Opazität verändert werden kann.

Besonders vorteilhaft ist es hierbei, wenn abhängig von einer eine Fahrzeugfunktion betreffenden Anwahl eines Bedienelements eine Veränderung des Abbilds des Fahrzeugs und/oder mit dem Abbild in Beziehung stehender 3D-Objekte zur Darstellung der Fahrzeugfunktion erfolgt. Eine solche Anwahl kann manuell durch einen Benutzer erfolgen, jedoch auch beispielsweise automatisch beim Initialisieren nach Aufruf der aktuellen Gesamtdarstellung. Besonders vorteilhaft können in dieser Ausführungsform Komfort- und Sicherheitsfunktionen, die üblicherweise rein über Listen und Icons gesteuert werden, durch eine dreidimensionale Visualisierung der Funktion angereichert werden. Es kann vorgesehen sein, dass während der Bedienung dynamisch der Betrachtungswinkel sowie die Position und Opazität des Abbilds, also des dreidimensionalen Fahrzeugmodells, angepasst werden, um die Funktion besser visualisieren zu können. Geht es beispielsweise um eine auf die Lenkung bezogene Funktion, so kann das Fahrzeug so gedreht werden, dass man von vorne auf es blickt, die Frontscheibe kann wenigstens teilweise transparent werden und das Lenkrad hervorgehoben dargestellt werden, beispielsweise auch farblich abweichend.

Besonders vorteilhaft ist es in diesem Zusammenhang, wenn die Veränderung der Darstellung auch in Abhängigkeit der Auswertung von wenigstens einem aktuellen und/oder einzustellenden Betriebsparameter der Fahrzeugfunktion erfolgt. Es können also aktuelle Betriebsparameter, die beispielsweise über einen Fahrzeugbus abgerufen werden können, berücksichtigt werden, um die Szene und somit die 3D-Darstellung anzupassen. Auch hinsichtlich von angewählten, jedoch noch nicht betätigten Einstellmöglichkeiten lässt sich eine Art Vorausschau generieren, die die technischen Sachverhalte im Gesamtkontext des Fahrzeugs besser vermitteln kann. So lässt sich eine tiefergehende Darstellung erreichen, die tatsächliche Zustände und/oder Effekte wiedergibt und den Bediener hervorragend unterstützt.

Zweckmäßigerweise kann wenigstens ein weiteres 3D-Objekt und/oder 2D-Overlay abhängig von der Fahrzeugfunktion und/oder der Auswertung ausgewählt und in einer die Fahrzeugfunktion bildlich darstellenden Beziehung zu dem Fahrzeug in die Szene oder die Darstellung eingefügt werden. Soll beispielsweise die Klimaanlage oder eine aktuelle/vorzunehmende Einstellung visualisiert werden, bieten sich Pfeile als zusätzliche Objekte an. Für Lichtsysteme lassen sich zusätzlich Lichtkegel und dergleichen anzeigen. Bei einer Verkehrszeichenerkennung lässt sich zusätzlich ein Verkehrszeichen anzeigen. Ersichtlich sind eine Vielzahl von Möglichkeiten denkbar.

Allgemein kann im Rahmen der vorliegenden Erfindung auch vorgesehen sein, dass wenigstens ein 2D-Objekt auf einer 2D-Ebene in die 3D-Darstellung eingefügt wird, insbesondere ein textbasiertes Objekt und/oder ein Icon. In dieser Variante der vorliegenden Erfindung werden also wenigstens ein 2D-Layer und wenigstens ein 3D-Layer gemischt, so dass beispielsweise klassische, weiter vorhandene 2D-Elemente wie Listen, Texte, Icons und dergleichen nicht dreidimensional gerendert werden müssen, sondern als eine 2D-Ebene (Layer) getrennt zur Verfügung gestellt werden können. Die 3D-Darstellung, die gerendert wurde, bildet eine 3D-Ebene (3D-Layer). Beide Ebenen können nun zusammengeführt und überlagert dargestellt werden. In der Anzeige erfolgt also eine Art "optisches Mischen" der Layer.

Konkret kann dabei vorgesehen sein, dass die 2D-Ebene nach dem Rendern der 3D-Darstellung mit dieser zusammengeführt wird, wobei insbesondere die 2D-Ebene oder die 3D-Darstellung den Hintergrund bilden, wobei insbesondere die 3D-Darstellung oder die 2D-Ebene wenigstens teilweise transparent dargestellt werden. Auch mehrere 2D-Ebenen und/oder 3D-Darstellungen sind im Rahmen der Erfindung denkbar. Es ergeben sich also verschiedene mögliche Ausprägungen des beschriebenen "optischen Mischens". So kann eine 2D-Ebene insbesondere wenigstens teilweise transparent vor einem 2D-Hintergrund realisiert werden, aber auch eine 2D-Ebene insbesondere wenigstens teilweise transparent vor einem 3D-Hintergrund. Möglich ist auch eine 3D-Darstellung insbesondere wenigstens teilweise transparent vor einem 2D-Hintergrund oder eine 3D-Darstellung insbesondere wenigstens teilweise transparent vor einem 3D-Hintergrund.

Neben dem Verfahren betrifft die Erfindung auch eine Vorrichtung zum Erzeugen einer 3D-Darstellung einer Benutzeroberfläche in einem Kraftfahrzeug, welche eine Recheneinrichtung zur Durchführung des erfindungsgemäßen Verfahrens umfasst. Eine solche Vorrichtung ist also Teil eines Fahrzeugs, insbesondere Kraftfahrzeugs, welches zudem eine Anzeigevorrichtung, insbesondere ein Display enthält, auf welchem die 3D-Darstellung angezeigt werden kann. Der Anzeigevorrichtung ist dann auch eine Bedieneinrichtung zugeordnet, um Eingaben eines Bedieners entgegen zu nehmen. Sämtliche Ausführungen zum erfindungsgemäßen Verfahren lassen sich analog auf die erfindungsgemäße Vorrichtung übertragen, mit welcher mithin die selben Vorteile gewonnen werden.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: ein Kraftfahrzeug mit einer erfindungsgemäßen Vorrichtung,
- Fig. 2: eine Skizze zur Durchführung des erfindungsgemäßen Verfahrens,
- Fig. 3: ein erstes Beispiel einer sich ergebenden Benutzeroberfläche,
- Fig. 4: ein zweites Beispiel einer sich ergebenden Benutzeroberfläche,
- Fig. 5: ein drittes Beispiel einer sich ergebenden Benutzeroberfläche, und
- Fig. 6: ein viertes Beispiel einer sich ergebenden Benutzeroberfläche.

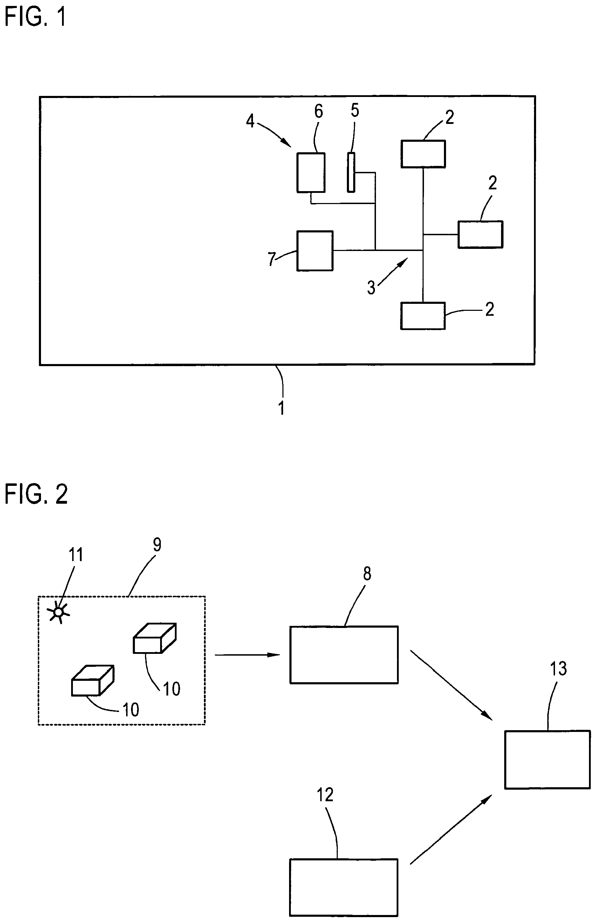

Fig. 1 zeigt eine Prinzipskizze eines Kraftfahrzeugs 1. Es umfasst mehrere hier nur schematisch angedeutete Fahrzeugsysteme 2, beispielsweise Fahrerassistenzsysteme und dergleichen, die über ein Bussystem 3, hier einen CAN-Bus, miteinander kommunizieren. Damit ein Fahrer Einstellungen vornehmen und Informationen abrufen kann, umfasst das Kraftfahrzeug 1 ferner ein Infotainment-System 4, welches neben einer Anzeigevorrichtung 5, die hier als Display ausgebildet ist, auch eine entsprechende Bedienvorrichtung 6 mit Bedienelementen umfasst. Das Display kann auch als ein Touchscreen ausgebildet sein.

Über eine Recheneinrichtung 7 als Teil des Infotainment-Systems 4 ist auch eine erfindungsgemäße Vorrichtung realisiert, das bedeutet, die Recheneinrichtung 7 ist zur Durchführung des erfindungsgemäßen Verfahrens ausgebildet, um 3D-Darstellungen für die Anzeigevorrichtung 5 zu erzeugen.

Dabei werden im hier dargestellten Ausführungsbeispiel zwei- und dreidimensionale Inhalte (Layer) kombiniert, wie anhand von Fig. 2 näher erläutert werden soll.

Die Recheneinrichtung 7 ist also zunächst dazu ausgebildet, durch Rendern eine 3D-Darstellung 8 zu ermitteln. Ausgangspunkt hierfür bildet eine Szene 9, mithin ein virtuelles räumliches Modell, in der 3D-Objekten 10 Positionen, Materialeigenschaften und Opazitäten zugeordnet sind, abhängig von einem aktuellen Bedienzustand. Auch die Positionen virtueller Lichtquellen 11 und eine Blickrichtung und -position eines Beobachters sind definiert. Durch Rendern wird diese Szene 9 auf eine zweidimensionale Bildebene projiziert, so dass die 3D-Darstellung 8 entsteht.

Zusätzlich kann auch wenigstens eine 2D-Ebene 12 (2D-Layer) geschaffen werden, die zweidimensionale, nicht zu rendernde Elemente wie Texte, Listen und dergleichen umfasst. Die 2D-Ebene 12 und die 3D-Darstellung 8 werden als Layer übereinandergelegt, wobei der nicht den Hintergrund bildende Layer wenigstens teilweise transparent sein kann. Insgesamt ergibt sich dann eine darzustellende Benutzeroberfläche 13, die auf der Anzeigevorrichtung 5 angezeigt wird.

Die darzustellenden 3D-Objekte 10 und zweidimensionalen Elemente, ihre Position, Orientierung, Opazität und Skalierung, die Blickrichtung und die Lichtquellen ergeben sich dabei aus dem aktuellen Bedienzustand und weiteren Daten, wie im Folgenden anhand von Beispielen näher erläutert werden soll.

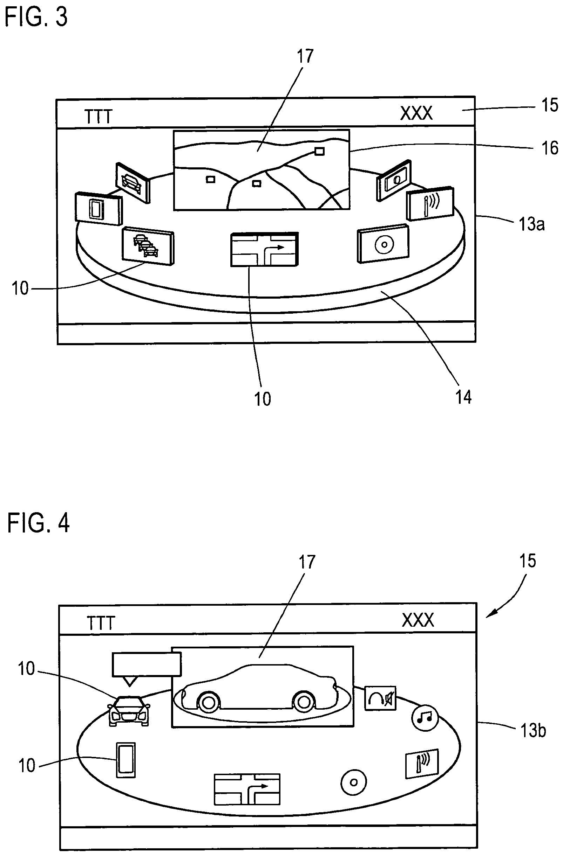

Fig. 3 zeigt ein erstes Beispiel einer sich ergebenden Benutzeroberfläche 13a. Zu sehen ist ein Auswahlmenu, dessen Menupunkte jeweils durch 3D-Objekte 10 dargestellt werden, hier Plättchen, auf denen ein Symbol abgebildet ist, dich sich auf einem im Raum schwebenden, runden Tablett 14 befinden. Die im oberen Bereich zu sehende Statusleiste 15 kann Teil der 2D-Ebene 12 sein.

Das am nächsten am Betrachter wirkende, mittig befindliche 3D-Objekt 10 entspricht dem Menupunkt, der sich soeben im Fokus befindet, mithin angewählt ist. Zu diesem Menupunkt wird auf einem in der Szene 9 in der Mitte des Tabletts 14 angeordneten, leinwandartigen Vorschauobjekt 16 eine Vorschau 17 angezeigt, was die Benutzeroberfläche 13a zeigen würde, wenn der Menupunkt ausgewählt würde. Nachdem vorliegend eine Navigationsfunktion angewählt ist, also im Fokus steht, ist in der Vorschau 17 eine Karte zu sehen.

Diese Karte ist vorliegend hochaktuell, das bedeutet, es werden von der Recheneinrichtung 7 aktuelle Daten, hier eine Position des Kraftfahrzeugs 1 und/oder ein Status eines Navigationssystems, über das Bussystem 3 abgefragt und verwendet, eine möglichst aktuelle Vorschau 17 zu geben. Diese kann insbesondere auch bewegt, das heißt animiert, sein, wird also dauernd aktuell gehalten, wie auch die Benutzeroberfläche 13a durch das Rendern in Echtzeit aktuell gehalten wird.

Selbstverständlich ist es auch denkbar, die Vorschau 17 über ein gespeichertes Bild, beispielsweise bei der letzten Benutzung oder ein Default-Bild, zu realisieren.

Führt der Benutzer eine Bedienhandlung durch, beispielsweise ein Weiterscrollen im Menu, wird eine animierte 3D-Darstellung 8 erzeugt, in der sich das Tablett 14 zum nächsten Menupunkt weiterdreht und dieser in den Fokus rückt. Auch die Vorschau 17 aktualisiert sich dann entsprechend.

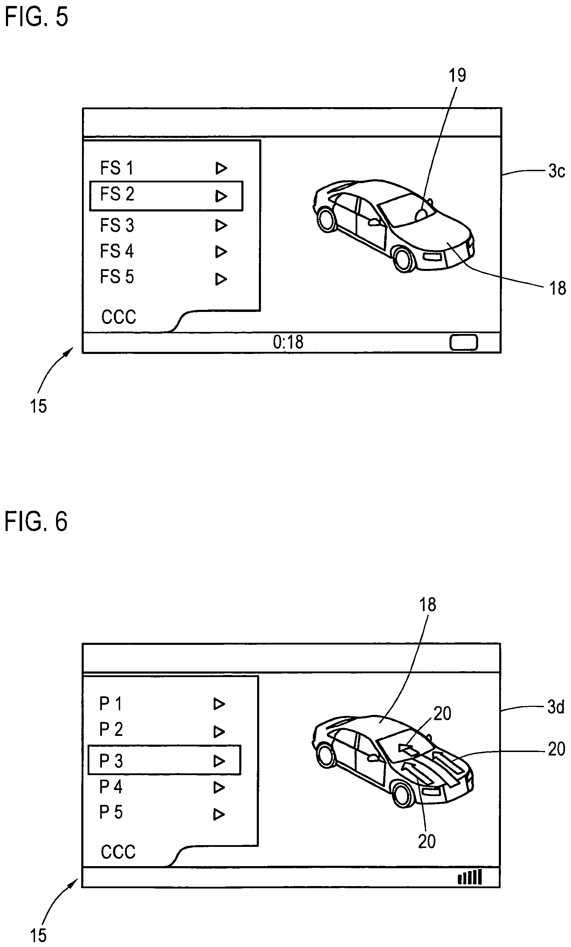

Eine leicht modifizierte Ausführungsform zeigt die Benutzeroberfläche 13b gemäß Fig. 4. Dort ist wiederum ein Menu dargestellt, in Form verschiedener 3D-Objekte 10. Im Fokus steht hier, farblich angezeigt, das Kraftfahrzeug-Objekt, während mittig wiederum als 3D-Textur eine Vorschau 17 gezeigt wird. Fig. 5 zeigt ein weiteres Beispiel einer über das erfindungsgemäße Verfahren erzeugbaren Benutzeroberfläche 13c. In diesem Fall wird neben einer Statusleiste 15 auch ein textbasiertes Menu als Teil der 2D-Ebene 12 erzeugt, während allerdings als 3D-Objekt 10 ein Abbild 18 des Kraftfahrzeugs 1 verwendet wird. In dem links dargestellten Menu werden verschiedene Fahrerassistenzsysteme (FS) zur Einstellung angeboten. Das hier nicht transparent, farblich umrandet gekennzeichnete, angewählte Fahrerassistenzsystem FS2 bezieht sich auf die Lenkung des Kraftfahrzeugs 1, weshalb das Abbild 18 des Kraftfahrzeugs 1 so angepasst wurde, das eine Aufsicht von vorne gegeben ist, die Windschutzscheibe transparent wirkt und das Lenkrad 19 deutlich hervorgehoben zu sehen ist.

Wird eine Verkehrszeichenerkennung angewählt, kann als zusätzliches 3D-Objekt 8 ein Verkehrszeichen in die Szene 9 eingefügt werden, bei Scheinwerfersystemen Lichtkegel und dergleichen.

Fig. 6 zeigt schließlich anhand der Benutzeroberfläche 13d eine weitere Realisierungsmöglichkeit, hier bei einer Einstellung der Klimaanlage. Dem Abbild 18 sind überlagert (als "Overlays") Pfeile 20 eingeblendet, die den aktuellen Betriebszustand der Klimaanlage verdeutlichen, mithin aufgrund wenigstens eines von dem Bussystem 3 erhaltenen Betriebsparameters ermittelt und der Szene 9 hinzugefügt wurden. Der aktuelle Zustand wird also für einen Bediener leichter ersichtlich.

Denkbar ist es jedoch auch, die Aufwirkungen einer im Fokus stehenden Einstellmöglichkeit (P) deutlicher hervorzuheben, indem sich die 3D-Darstellung in Echtzeit anpasst, wenn die Einstellungsmöglichkeit in den Fokus gerät oder gar konkrete Parameter vorgeschlagen werden.

Ein anderes Beispiel, bei dem eine solche Anzeige eines aktuellen Zustands oder Vorausschauzustands eines Fahrzeugsystems nützlich ist, ist ein Beleuchtungssystem. Hier können beispielsweise Lichtkegel als weitere 3D-Objekte 10 in der Szene 9 ergänzt werden, um anzuzeigen, wie die Ausleuchtung mit den aktuellen bzw. einzustellenden Betriebsparametern aussehen würde und dergleichen.

Es sei an dieser Stelle noch angemerkt, dass es im Rahmen der vorliegenden Erfindung grundsätzlich möglich ist, beliebige der 3D-Objekte auch bewegt zu gestalten, um die 3D-Darstellung und mithin die Benutzeroberfläche 13 dahingehend zu verbessern.

## Patentansprüche

1. Verfahren zum Erzeugen einer 3D-Darstellung (8) einer Benutzeroberfläche (13, 13a, 13b, 13c, 13d) in einem Fahrzeug (1),
**dadurch gekennzeichnet,**
**dass** eine wenigstens ein 3D-Objekt (10) enthaltende, insbesondere bewegte, Szene (9) durch eine fahrzeuginterne Recheneinrichtung (7) zur Ermittlung der 3D-Darstellung (8) gerendert wird.

2. Verfahren nach Anspruch 1, **dadurch gekennzeichnet, dass** bei Vornahme wenigstens einer Bedienhandlung die Szene (9) verändert und die 3D-Darstellung (8), insbesondere in Echtzeit, neu gerendert wird.

3. Verfahren nach Anspruch 2, **dadurch gekennzeichnet, dass** zur Veränderung der Szene (9) wenigstens eines des wenigstens einen 3D-Objektes (10) rotiert und/oder translatiert und/oder skaliert und/oder in seiner Opazität angepasst wird und/oder wenigstens ein 3D-Objekt (10) hinzugefügt oder entfernt wird.

4. Verfahren nach einem der vorangehenden Ansprüche, **dadurch gekennzeichnet, dass** zur Darstellung eines Menus für jeden Menupunkt ein 3D-Objekt (10) in der Szene (9) verwendet wird.

5. Verfahren nach Anspruch 4, **dadurch gekennzeichnet, dass** zu einem aktuell angewählten Menupunkt ein insbesondere leinwandartig in die 3D-Szene (9) eingepflegtes Vorschauobjekt (16), insbesondere eine 3D-Textur, verwendet wird, welches eine zweidimensionale Vorschau (17) der Benutzeroberfläche (13, 13a, 13b, 13c, 13d) nach Auswahl des Menupunktes umfasst,

6. Verfahren nach Anspruch 5, **dadurch gekennzeichnet, dass** das Vorschauobjekt (16) aus Blickrichtung der Szene (9) hinter dem aktuell angewählten Menupunkt angeordnet ist.

7. Verfahren nach Anspruch 5 oder 6, **dadurch gekennzeichnet, dass** die Vorschau (17) während der Darstellung basierend auf aktuellen Daten errechnet wird und insbesondere während der Darstellungszeit aktuell gehalten wird.

8. Verfahren nach Anspruch 5 oder 6, **dadurch gekennzeichnet, dass** eine während der letzten Benutzung der dem aktuell angewählten Menupunkt zugeordneten Funktionalität angezeigte, gespeicherte Darstellung als Vorschau (17) verwendet wird oder, falls der Menupunkt noch nicht ausgewählt wurde, eine gespeicherte Default-Darstellung als Vorschau (17) verwendet wird.

9. Verfahren nach einem der vorangehenden Ansprüche, **dadurch gekennzeichnet, dass** als ein 3D-Objekt (10) ein Abbild (18) des Fahrzeugs (1) verwendet wird.

10. Verfahren nach Anspruch 9, **dadurch gekennzeichnet, dass** abhängig von einer eine Fahrzeugfunktion betreffenden Anwahl eines Bedienelements eine Veränderung des Abbilds (18) des Fahrzeugs (1) und/oder mit dem Abbild (14) in Beziehung stehender 3D-Objekte (10) zur Darstellung der Fahrzeugfunktion erfolgt.

11. Verfahren nach Anspruch 10, **dadurch gekennzeichnet, dass** die Veränderung der 3D-Darstellung (8) auch in Abhängigkeit der Auswertung von wenigstens einem aktuellen und/oder einzustellenden Betriebsparameter der Fahrzeugfunktion erfolgt.

12. Verfahren nach Anspruch 10 oder 11, **dadurch gekennzeichnet, dass** wenigstens ein weiteres 3D-Objekt (10) und/oder 2D-Overlay abhängig von der Fahrzeugfunktion und/oder der Auswertung ausgewählt und in einer die Fahrzeugfunktion bildlich darstellenden Beziehung zu dem Fahrzeug (1) in die Szene (9) oder die 3D-Darstellung (8) eingefügt wird.

13. Verfahren nach einem der vorangehenden Ansprüche, **dadurch gekennzeichnet, dass** wenigstens ein 2D-Objekt auf einer 2D-Ebene (12) in die 3D-Darstellung (8) eingefügt wird, insbesondere ein textbasiertes Objekt und/oder ein Icon.

14. Verfahren nach Anspruch 13, **dadurch gekennzeichnet, dass** die 2D-Ebene (12) nach dem Rendern der 3D-Darstellung (8) mit dieser zusammengeführt wird., wobei insbesondere die 2D-Ebene (12) oder die 3D-Darstellung (8) den Hintergrund bilden, wobei insbesondere die 3D-Darstellung (8) oder die 2D-Ebene (12) wenigstens teilweise transparent dargestellt werden.

15. Vorrichtung zum Erzeugen einer 3D-Darstellung einer Benutzeroberfläche (13, 13a, 13b, 13c, 13d) in einem Fahrzeug (1), umfassend eine zur Durchführung eines Verfahrens nach einem der vorangehenden Ansprüche ausgebildete Recheneinrichtung (7).

## Claims

1. Method for generating a 3D depiction (8) of a user interface (13, 13a, 13b, 13c, 13d) in a vehicle (1),
**characterised in that**
an, in particular moving, scene (9) containing at least one 3D-object (10) is rendered by a vehicle-internal calculation device (7) to determine the 3D depiction (8).

2. Method according to claim 1, **characterised in that**, during execution of at least one operational action, the scene (9) changes and the 3D depiction (8) is newly rendered, in particular in real time.

3. Method according to claim 2, **characterised in that**, to change the scene (9), at least one of the at least one 3D objects (10) is rotated and/or translated and/or resized and/or adapted in its opacity and/or at least one 3D object (10) is added or removed.

4. Method according to one of the preceding claims, **characterised in that**, to depict a menu, a 3D object (10) in the scene (9) is used for each menu point.

5. Method according to claim 4, **characterised in that** for a currently selected menu point a preview object (16), in particular a 3D texture, which is incorporated into the 3D scene (9), in particular in a screen-like manner, is used, which comprises a two-dimensional preview (17) of the user interface (13, 13a, 13b, 13c, 13d) after selection of the menu point.

6. Method according to claim 5, **characterised in that** the preview object (16) is arranged behind the currently selected menu point from the viewing direction of the scene (9).

7. Method according to claim 5 or 6, **characterised in that** the preview (17) is calculated during the depiction based on current data and is kept up-to-date, in particular during the depiction time.

8. Method according to claim 5 or 6, **characterised in that** a stored depiction displayed during the last use of the functionality allocated to the currently selected menu point is used as a preview (17) or, if the menu point has not yet been selected, a stored default depiction is used as a preview (17).

9. Method according to one of the preceding claims, **characterised in that** an image (18) of the vehicle (1) is used as a 3D object (10).

10. Method according to claim 9, **characterised in that**, depending on a selection of an operating element relating to a vehicle function, a change of the image (18) of the vehicle (1) and/or of 3D objects (10) related to the image (14) occurs to depict the vehicle function.

11. Method according to claim 10, **characterised in that** the change of the 3D depiction (8) also occurs depending on the evaluation of at least one current operating parameter of the vehicle function and/or an operating parameter of the vehicle function to be set.

12. Method according to claim 10 or 11, **characterised in that** at least one further 3D object (10) and/or 2D overlay is selected depending on the vehicle function and/or the evaluation and is inserted into the scene (9) or the 3D depiction (8) in a relationship to the vehicle (1) which visually depicts the vehicle function.

13. Method according to one of the preceding claims, **characterised in that** at least one 2D object is inserted into the 3D depiction (8) on a 2D plane (12), in particular a text-based object and/or an icon.

14. Method according to claim 13, **characterised in that**, after the rendering of the 3D depiction (8), the 2D plane (12) is merged with the latter, wherein in particular the 2D plane (12) or the 3D depiction (8) forms the background, wherein in particular the 3D depiction (8) or the 2D plane (12) are depicted to be at least partially transparent.

15. Device for generating a 3D depiction of a user interface (13, 13a, 13b, 13c, 13d) in a vehicle (1), comprising a calculating device (7) designed for implementing a method according to one of the preceding claims.

## Revendications

1. Procédé pour la production d'une représentation 3D (8) d'une interface d'utilisateur (13, 13a, 13b, 13c, 13d) dans un véhicule (1),
**caractérisé en ce**
**qu'**une scène (9), en particulier animée, contenant au moins un objet 3D (10) est préparée par un dispositif de calcul (7) interne au véhicule pour déterminer la représentation 3D (8).

2. Procédé selon la revendication 1, **caractérisé en ce que**, lorsqu'au moins une opération de commande est effectuée, la scène (9) est modifiée et la représentation 3D (8) est à nouveau préparée, en particulier en temps réel.

3. Procédé selon la revendication 2, **caractérisé en ce que**, pour modifier la scène (9), au moins un des objets 3D (10) est tourné et/ou déplacé en translation et/ou modifié quant à son échelle de représentation et/ou adapté quant à son opacité, et/ou au moins un objet 3D (10) est ajouté ou supprimé.

4. Procédé selon l'une quelconque des revendications précédentes, **caractérisé en ce que**, pour représenter un menu, un objet 3D (10) dans la scène (9) est utilisé pour chaque point de menu.

5. Procédé selon la revendication 4, **caractérisé en ce que**, pour un point de menu actuellement choisi, un objet d'aperçu (16) intégré en particulier à la manière d'un fond d'écran dans la scène 3D (9), en particulier une texture 3D, est utilisé, lequel comprend un aperçu bidimensionnel (17) de la surface d'utilisateur (13, 13a, 13b, 13c, 13d) après la sélection du point de menu.

6. Procédé selon la revendication 5, **caractérisé en ce que** l'objet d'aperçu (16) est disposé, suivant la direction d'observation de la scène (9), derrière le point de menu actuellement choisi.

7. Procédé selon la revendication 5 ou 6, **caractérisé en ce que** l'aperçu (17) est calculé pendant la représentation sur la base de données actuelles et est actualisé en particulier pendant la durée de représentation.

8. Procédé selon la revendication 5 ou 6, **caractérisé en ce qu'**une représentation mémorisée, affichée au cours de la dernière utilisation de la fonctionnalité associée au point de menu actuellement choisi est utilisée comme aperçu (17), ou en ce que, si le point de menu n'a pas encore été sélectionné, une représentation par défaut mémorisée est utilisée comme aperçu (17).

9. Procédé selon l'une quelconque des revendications précédentes, **caractérisé en ce qu'**une image (18) du véhicule (1) est utilisée comme objet 3D (10).

10. Procédé selon la revendication 9, **caractérisé en ce que**, en fonction d'un choix, concernant une fonction de véhicule, d'un élément de commande, une modification de l'image (18) du véhicule (1) et/ou d'objets 3D (10) en relation avec l'image (14) est effectuée pour représenter la fonction de véhicule.

11. Procédé selon la revendication 10, **caractérisé en ce que** la modification de la représentation 3D (8) est effectuée également en fonction de l'évaluation d'au moins un paramètre de fonctionnement, actuel et/ou à régler, de la fonction de véhicule.

12. Procédé selon la revendication 10 ou 11, **caractérisé en ce qu'**au moins un autre objet 3D (10) et/ou superposition 2D sont sélectionnés en fonction de la fonction de véhicule et/ou de l'évaluation et sont insérés, dans une relation, représentant par l'image la fonction de véhicule, au véhicule (1), dans la scène (9) ou dans la représentation 3D (8).

13. Procédé selon l'une quelconque des revendications précédentes, **caractérisé en ce qu'**au moins un objet 2D sur un plan 2D (12) est inséré dans la représentation 3D (8), en particulier un objet à base de texte et/ou une icône.

14. Procédé selon la revendication 13, **caractérisé en ce que**, après la préparation de la représentation 3D (8), le plan 2D (12) est réuni à celle-ci, le plan 2D (12) ou la représentation 3D (8) formant en particulier l'arrière-plan, la représentation 3D (8) ou le plan 2D (12) en particulier étant représenté(e) au moins en partie de manière transparente.

15. Dispositif pour la production d'une représentation 3D d'une interface d'utilisateur (13, 13a, 13b, 13c, 13d) dans un véhicule (1), comprenant un dispositif de calcul (7) réalisé pour la mise en oeuvre d'un procédé selon l'une quelconque des revendications précédentes.
